(19) Europäisches Patentamt
European Patent Office
Office européen des brevets

(11) **EP 2 887 585 B1**

(12) **FASCICULE DE BREVET EUROPEEN**

(45) Date de publication et mention
de la délivrance du brevet:
**04.05.2016 Bulletin 2016/18**

(51) Int Cl.:
***H04L 12/26*** *(2006.01)*

(21) Numéro de dépôt: **14194322.5**

(22) Date de dépôt: **21.11.2014**

(54) **Procédé de surveillance d'une communication entre un équipement émetteur et un équipement récepteur**

Verfahren zur Überwachung einer Kommunikation zwischen einem Sende- und einem Empfangsgerät

Method for monitoring a communication between a transmitter entity and a receiver entity

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.12.2013 FR 1363168**

(43) Date de publication de la demande:
**24.06.2015 Bulletin 2015/26**

(73) Titulaire: **Schneider Electric Industries SAS**
**92500 Rueil-Malmaison (FR)**

(72) Inventeurs:
• **Roger, Mireille**
**16600 Ruelle-sur-Touvre (FR)**

• **Tardivon, Alain**
**16170 Gourville (FR)**

(74) Mandataire: **Dufresne, Thierry et al**
**Schneider Electric Industries SAS**
**Service Propriété Industrielle**
**35 rue Joseph Monier - CS 30323**
**92506 Rueil-Malmaison Cedex (FR)**

(56) Documents cités:
**WO-A1-2012/174934      GB-A- 2 363 548**
**US-A1- 2008 165 796**

**Description**

**Domaine technique de l'invention**

La présente invention se rapporte à un procédé de surveillance d'une communication entre un équipement émetteur et un équipement récepteur.

**Etat de la technique**

Dans le milieu industriel, la communication entre les équipements se doit d'être fiable car elle participe au contrôle-commande des machines. Soit la communication affiche intrinsèquement un niveau élevé de fiabilité, ce qui peut s'avérer difficile à obtenir, soit elle doit être surveillée afin de détecter les erreurs de communication entre les équipements. Dans ce deuxième cas, il s'agit de pouvoir émettre, en plus des trames de communication de données échangées entre les équipements, des trames de diagnostic pour s'assurer en permanence de la fiabilité de communication. L'émission de trames de diagnostic permet de détecter les erreurs de communication et ainsi d'alerter les équipements de ces erreurs. Pour permettre de détecter une erreur de communication avec une fiabilité maximale, la solution la plus aisée consiste à émettre des trames de diagnostic à une fréquence élevée. Cependant, l'émission de trames à une fréquence élevée entraîne une saturation de la liaison de communication et une surconsommation d'énergie électrique pour les équipements impliqués.
Les documents US2008/165796A1, GB2363548A, WO2012/174934A1 décrivent des systèmes de communication et de génération de trames.
Le but de l'invention est de proposer un procédé de surveillance d'une communication entre un équipement émetteur et un équipement récepteur, qui permet de garantir une fiabilité sur l'état de la communication proche de 100%, tout en évitant de saturer la liaison de communication et d'entraîner une surconsommation d'énergie électrique.

**Exposé de l'invention**

Ce but est atteint par un procédé de surveillance d'une communication entre un équipement émetteur et un équipement récepteur, ledit équipement émetteur transmettant des trames de communication de données à l'équipement récepteur, le temps écoulé entre deux trames de communication de données étant au moins égal à une durée minimale, ledit procédé étant caractérisé en ce qu'il comporte les étapes suivantes :

- Détermination d'un instant d'émission d'une première trame de diagnostic de rang 0 selon la relation suivante :

$$\mathrm{Tdiag}[0] = \Delta t_{mini} - \Delta t diag \text{ dans laquelle :}$$

dans laquelle :

- $\Delta t_{mini}$ correspond à une durée minimale entre l'émission de deux trames de communication,
- $\Delta t diag$ correspond à une durée à respecter pour obtenir une fiabilité optimisée sur l'état de la communication,

- Emission par l'équipement émetteur de ladite première trame de diagnostic à l'instant d'émission déterminé, à destination de l'équipement récepteur,
- Détermination à partir d'une fonction croissante des instants d'émission Tdiag[i] des trames de diagnostic suivantes de rang i, ladite fonction croissante étant choisie pour obtenir des instants d'émission séparés entre eux d'une durée variable,
- Emission desdites trames de diagnostic de rang i par l'équipement émetteur à destination de l'équipement récepteur, tant qu'une nouvelle trame de communication de données n'a pas été émise par l'équipement émetteur.

Selon une particularité, le procédé comporte une étape de limitation à une valeur maximale de la durée entre deux trames de diagnostic successives, lorsque la durée entre un premier instant d'émission d'une trame de diagnostic de rang i et un deuxième instant d'émission d'une trame de rang i+1 dépasse ladite valeur maximale.
Selon une autre particularité, ladite valeur maximale correspond à une période moyenne d'émission des trames de communication de données.
Selon une autre particularité, la valeur de $\Delta t diag$ est déterminée à partir de la relation suivante :

$$\Delta t diag = \Delta t \frac{\text{Ln(Fiab)}}{\text{Ln}(1 - \tau_{\text{échec}})}$$

Avec :

- Fiab qui correspond à la fiabilité recherchée,
- $\tau_{\text{échec}}$ qui correspond au taux d'apparition des échecs de communication entre deux trames de communication de données,
- $\Delta t$ qui correspond à la durée entre deux trames de communication de données successives.

**Brève description des figures**

D'autres caractéristiques et avantages vont apparaître dans la description détaillée qui suit faite en regard des dessins annexés dans lesquels :

- Les figures 1 et 2 illustrent le principe de fonctionnement du procédé de diagnostic de l'invention,
- Les figures 3A et 3B illustrent respectivement le principe du procédé de diagnostic de l'invention et celui d'un procédé de diagnostic connu dans l'état de la technique,
- La figure 4 illustre le principe de fonctionnement du procédé de diagnostic de l'invention, selon une variante de réalisation.

**Description détaillée d'au moins un mode de réalisation**

Le procédé de l'invention s'applique à une installation comprenant au moins un équipement émetteur et un équipement récepteur connectés entre eux à travers un réseau de communication de type filaire ou sans-fil. Bien entendu, chacun de ces équipements pourra exercer les deux fonctions d'émetteur et de récepteur.
Dans cette installation, l'équipement émetteur envoie des trames de communication C de données à l'équipement récepteur, par exemple pour le contrôle-commande d'une machine. La période $\Delta t$ d'émission des trames de communication C de données n'est pas forcément fixe.
Le procédé de l'invention consiste à surveiller la communication entre l'équipement émetteur et l'équipement récepteur. Il consiste en l'émission de trames de diagnostic D dédiées à la surveillance de la communication. L'objectif de la surveillance est de connaitre l'état de la communication avant la prochaine trame de communication C de données pour pouvoir s'assurer que celle-ci a le maximum de chance d'avoir lieu. Pour cela, au moins une trame de diagnostic D doit être émise avant la probable prochaine émission d'une trame de communication C de données. L'instant d'émission Tdiag[0] de la première trame de diagnostic D est donc déterminé à partir de la période minimale à respecter entre l'émission de deux trames de communication C de données, celle-ci étant connue de l'équipement émetteur. L'instant d'émission Tdiag[0] de la première trame de diagnostic s'exprime ainsi par la relation suivante :

$$\text{Tdiag[0]} = \Delta t mini - \Delta t diag \qquad (1)$$

Dans laquelle :

- $\Delta t diag$ est une durée déterminée pour assurer une fiabilité sur l'état de la communication proche de 100%

- $\Delta t mini$ correspond à la période minimale à respecter entre deux trames de communication de données.

Sur les figures annexées, la fin de la période $\Delta t mini$ est représentée par une flèche verticale en pointillés. Cet instant d'émission ne correspond pas à l'émission d'une trame de communication C de données mais à l'instant à partir duquel une trame de communication C de données pourrait être émise.
La valeur $\Delta t diag$ est déterminée par la relation suivante :

$$\Delta t diag = \Delta t \frac{\text{Ln(Fiab)}}{\text{Ln}(1 - \tau_{\text{échec}})} \qquad (2)$$

Dans laquelle :

- $\Delta t$ correspond à la période d'émission des trames de communication C de données,

- Fiab correspond au taux de fiabilité recherchée pour la communication, par exemple 99%,

- $\tau_{\text{échec}}$ correspond à la probabilité d'apparition d'un échec de communication. Entre 2 émissions de trames de communication C de données ($\Delta t$), la valeur de ce taux d'échec est considérée constante.

Tant qu'une trame de communication C de données n'a pas été envoyée par l'équipement émetteur, celui-ci envoie des trames de diagnostic D à l'équipement récepteur. Préférentiellement, les trames de diagnostic D sont émises à une fréquence variable, permettant d'éviter une saturation de la communication et une surconsommation d'énergie de la part des équipements.

Les instants d'émission des trames de diagnostic D, qui suivent la première trame de diagnostic émise à l'instant Tdiag[0], sont déterminées à partir d'une fonction croissante comme par exemple une suite géométrique choisie pour obtenir des instants d'émission séparés d'une durée variable. La fonction croissante permettant de déterminer les instants d'émission Tdiag[i] des trames de diagnostic de rang i (avec i>0) est par exemple la suite géométrique suivante :

$$\text{Tdiag}[i]= r(i) \times \text{Tdiag}\ [i\text{-}1] \qquad (3)$$

Dans laquelle r(i) correspond à la raison de la suite.

Cette fonction croissante permet de faire évoluer la durée entre deux trames de diagnostic D, avant l'émission de la prochaine trame de communication C de données, tout en assurant une fiabilité maximale (proche de 100%). La durée entre la dernière trame de communication de données et la prochaine trame de communication de données augmentant, l'occurrence d'un échec de communication diminue puisque ce taux est considéré constant entre 2 trames de communication C de données. Aussi, même si les trames de diagnostic sont de plus en plus éloignées les unes des autres, la fiabilité sur l'état de la communication reste élevée, proche de 100%. Tant qu'une trame de communication C de données n'a pas été émise par l'équipement émetteur, des trames de diagnostic D sont émises aux instants d'émission *Tdiag[i]* déterminés grâce à la relation (3) ci-dessus.

Après chaque émission de trame de communication C de données, le procédé de diagnostic est réinitialisé et l'instant d'émission de la prochaine trame de diagnostic D, correspondant à Tdiag[0], est déterminé grâce à la relation (1) ci-dessus et les instants suivants Tdiag[i] sont déterminés grâce à la relation (3).

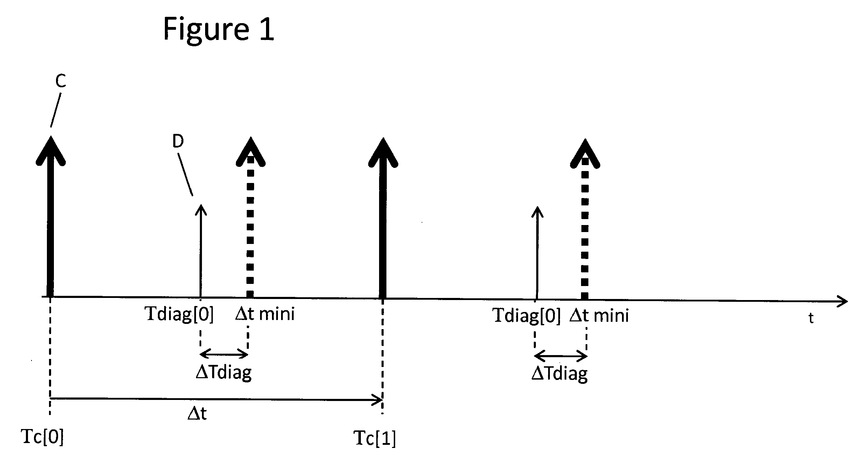

La figure 1 illustre l'émission d'une première trame de communication de données et l'émission d'une trame de diagnostic à l'instant Tdiag[0] déterminé à partir de la relation (1) ci-dessus. Sur cette figure 1, une deuxième trame de communication C est émise avant l'émission d'une seconde trame de diagnostic.

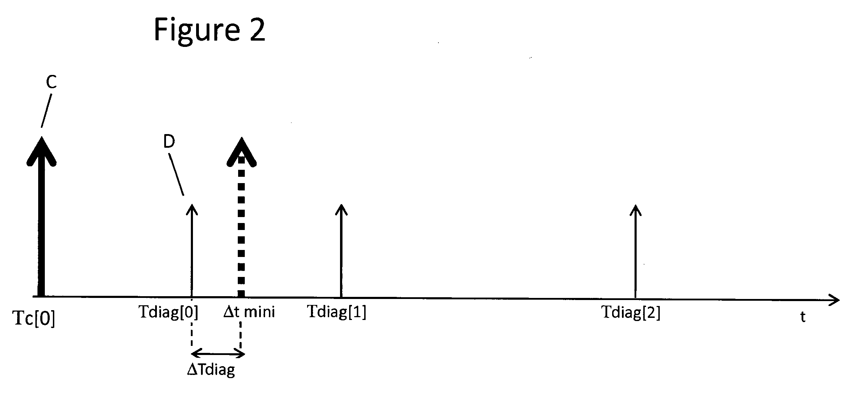

Sur la figure 2, des trames de diagnostics sont émises aux instants d'émission Tdiag[1] et Tdiag[2] déterminés à partir de la relation (3) ci-dessus. Sur cette figure, on remarque bien que la fréquence d'émission entre les trames de diagnostic n'est pas fixe.

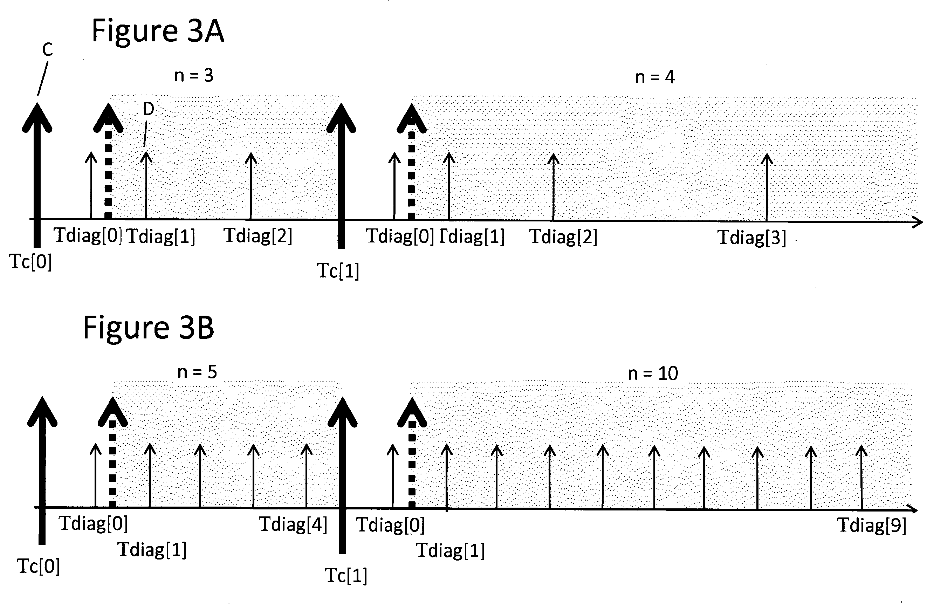

Les figures 3A et 3B permettent de comparer la solution de l'invention à une solution de l'état de la technique, dans laquelle des trames de diagnostic sont émises à une fréquence fixe. Sur la figure 3A, correspondant au procédé de l'invention, la surveillance est réalisée avec seulement l'émission de trois trames de diagnostic (n=3) entre les deux premières trames de communication. Sur la figure 3B, correspondant à la solution de l'état de la technique, pour un même taux de fiabilité de la communication, cinq trames (n=5) de diagnostic doivent être émises sur la même période pour surveiller la communication. Sur une période plus longue entre deux trames de communication de données, quatre trames de diagnostic (n=4) sont nécessaires dans le cadre de l'invention alors que dix trames de diagnostic (n=10) seront utiles dans la solution à fréquence fixe de l'état de la technique.

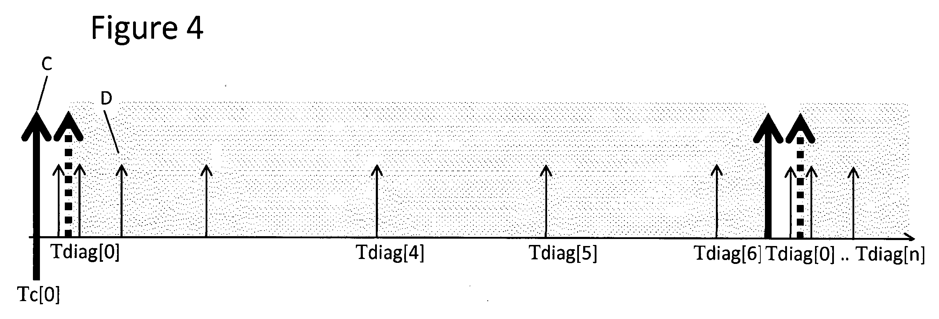

Selon l'invention, si la durée entre deux trames de diagnostic D devient trop longue, celle-ci peut être plafonnée à une valeur déterminée. Cette valeur sera par exemple la période moyenne d'émission des trames de communication de données. La figure 4 illustre une telle solution dans laquelle les instants d'émission Tdiag[4], Tdiag[5] et Tdiag[6] sont émis à une période fixe, celle-ci correspondant à une valeur maximale, qui peut être mémorisée par exemple par l'équipement émetteur.

L'invention présente ainsi plusieurs avantages, notamment :

- De garantir une fiabilité sur l'état de la communication proche de 100%, tout en évitant de saturer la liaison de communication et d'entraîner une surconsommation d'énergie électrique,

- D'adapter la fréquence d'émission des trames de diagnostic à la fréquence d'émission des trames de communication de données,

- D'être simple à mettre en oeuvre et de pouvoir s'adapter à des réseaux de communication de type filaire ou sans-fil.

## Revendications

1. Procédé de surveillance d'une communication entre un équipement émetteur et un équipement récepteur, ledit équipement émetteur transmettant des trames de communication (C) de données à l'équipement récepteur, le temps écoulé entre deux trames de communication de données étant au moins égal à une durée minimale, ledit procédé étant **caractérisé en ce qu'**il comporte les étapes suivantes :

- Détermination d'un instant d'émission $T_{diag}[0]$ d'une première trame de diagnostic (D) de rang 0 selon la relation suivante :

$$T{diag}[0]=\Delta t_{mini}- \Delta tdiag \text{ dans laquelle :}$$

dans laquelle :

- $\Delta t_{mini}$ correspond à une durée minimale entre l'émission de deux trames de communication,
- $\Delta tdiag$ correspond à une durée à respecter pour obtenir une fiabilité optimisée sur l'état de la communication, la durée $\Delta tdiag$ étant déterminée à partir de la relation suivante :

$$\Delta tdiag = \Delta t \frac{Ln(Fiab)}{Ln(1 - \tau_{échec})}$$

Avec :

- Fiab qui correspond à la fiabilité recherchée,
- $\tau_{échec}$ qui correspond au taux d'apparition des échecs de communication entre deux trames de communication de données,
- $\Delta t$ qui correspond à la durée entre deux trames de communication de données successives

- Emission par l'équipement émetteur de ladite première trame de diagnostic (D) à l'instant d'émission déterminé, à destination de l'équipement récepteur,
- Détermination à partir d'une fonction croissante des instants d'émission Tdiag[i] des trames de diagnostic suivantes de rang i, ladite fonction croissante étant choisie pour obtenir des instants d'émission séparés entre eux d'une durée variable,
- Emission desdites trames de diagnostic de rang i par l'équipement émetteur à destination de l'équipement récepteur, tant qu'une nouvelle trame de communication de données n'a pas été émise par l'équipement émetteur.

2. Procédé selon la revendication 1, **caractérisé en ce qu'**il comporte une étape de limitation à une valeur maximale de la durée entre deux trames de diagnostic (D) successives, lorsque la durée entre un premier instant d'émission d'une trame de diagnostic de rang i et un deuxième instant d'émission d'une trame de rang i+1 dépasse ladite valeur maximale.

3. Procédé selon la revendication 2, **caractérisé en ce que** ladite valeur maximale correspond à une période moyenne d'émission des trames de communication de données.

## Patentansprüche

1. Verfahren zur Überwachung einer Kommunikation zwischen einer Sendeausrüstung und einer Empfangsausrüstung, wobei die Sendeausrüstung Datenkommunikationsraster (C) an die Empfangsausrüstung überträgt, wobei die Zeit, die zwischen zwei Datenkommunikationsrastern vergeht, mindestens gleich einer Mindestdauer ist, wobei das Verfahren **dadurch gekennzeichnet ist, dass** es die folgenden Schritte umfasst:

- Bestimmung eines Sendezeitpunktes $T_{diag}[0]$ eines ersten Diagnoserasters (D) des Ranges 0 nach folgendem Verhältnis:

$$T_{diag}[0] = \Delta t_{mini} - \Delta t_{diag}, \text{ wobei}$$

wobei:

- $\Delta t_{mini}$ einer Mindestdauer zwischen dem Senden von zwei Kommunikationsrastern entspricht,
- $\Delta t_{diag}$ einer Dauer entspricht, die einzuhalten ist, um eine optimierte Zuverlässigkeit auf dem Stand der Kommunikation zu erhalten, wobei die Dauer $\Delta t_{diag}$ auf Basis von folgendem Verhältnis bestimmt wird:

$$\Delta tdiag = \Delta t \frac{Ln(Fiab)}{Ln(1 - \tau_{Scheitern})}$$

wobei:

- Fiab der gewünschten Zuverlässigkeit entspricht,
- $T_{Scheitern}$ der Rate des Auftretens von gescheiterten Kommunikationen zwischen zwei Datenkommunikationsrastern entspricht,
- $\Delta t$ der Dauer zwischen zwei aufeinanderfolgenden Datenkommunikationsrastern entspricht

- Senden, durch die Sendeausrüstung, des ersten Diagnoserasters (D) zu dem bestimmten Sendezeitpunkt in Richtung der Empfangsausrüstung,
- Bestimmung, auf Basis einer steigenden Funktion, der Sendezeitpunkte $T_{diag}[i]$ der folgenden Diagnoseraster des Ranges i, wobei die steigende Funktion derart gewählt ist, dass voneinander um eine variable Dauer getrennte Sendezeitpunkte erhalten werden,
- Senden der Diagnoserasters des Ranges i durch die Sendeausrüstung in Richtung der Empfangsausrüstung, solange kein neuer Datenkommunikationsraster von der Sendeausrüstung gesandt wurde.

2. Verfahren nach Anspruch 1, **dadurch gekennzeichnet, dass** es einen Schritt der Begrenzung der Dauer zwischen zwei aufeinanderfolgenden Diagnoserastern (D) auf einen Maximalwert umfasst, wenn die Dauer zwischen einem ersten Sendezeitpunkt eines Diagnoserasters des Ranges i und einem zweiten Sendezeitpunkt eines Rasters des Ranges i+1 den Maximalwert überschreitet.

3. Verfahren nach Anspruch 2, **dadurch gekennzeichnet, dass** der Maximalwert einer durchschnittlichen Sendeperiode der Datenkommunikationsraster entspricht.

**Claims**

1. Method for monitoring a communication between a transmitter entity and a receiver entity, said transmitter entity sending data communication frames (C) to the receiver entity, the time elapsed between two data communication frames being at least equal to a minimum duration, said method being **characterized in that** it comprises the following steps:

- Determination of an instant of transmission $T_{diag}[0]$ of a first diagnostic frame (D) of rank 0 according to the following relation:

$$Tdiag[0] = \Delta t_{mini} - \Delta tdiag \text{ in which}$$

in which:

- $\Delta t_{mini}$ corresponds to a minimum duration between the transmission of two communication frames,
- $\Delta tdiag$ corresponds to a duration to be complied with to obtain optimized reliability in the state of the communication, the duration $\Delta tdiag$ being determined from the following relation:

$$\Delta tdiag = \Delta t \frac{Ln(Fiab)}{Ln(1 - \tau_{failure})}$$

With:

- Fiab which corresponds to the reliability sought
- $\tau_{failure}$ which corresponds to the rate of occurrence of failures of communication between two data communication frames,
- $\Delta t$ which corresponds to the duration between two successive data communication frames.

- Emission by the transmitter entity of said first diagnostic frame (D) at the determined instant of transmission, destined for the receiver entity,
- Determination on the basis of an increasing function of the instants of transmission Tdiag[i] of the following diagnostic frames of rank i, said increasing function being chosen to obtain instants of transmission that are separated from one another by a variable duration,
- Emission of said diagnostic frames of rank i by the transmitter entity destined for the receiver entity, as long as a new data communication frame has not been transmitted by the transmitter entity.

2. Method according to Claim 1, **characterized in that** it comprises a step of limiting to a maximum value the duration between two successive diagnostic frames (D), when the duration between a first instant of transmission of a diagnostic frame of rank i and a second instant of transmission of a frame of rank i+1 exceeds said maximum value.

3. Method according to Claim 2, **characterized in that** said maximum value corresponds to an average period of transmission of the data communication frames.

# Figure 1

Figure 2

## Figure 3A

## Figure 3B

EP 2 887 585 B1

Figure 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2008165796 A1
- GB 2363548 A
- WO 2012174934 A1